# DEMANDE DE BREVET EUROPEEN

(11) **EP 3 979 776 A1**
(43) Date de publication de la demande: **06.04.2022**
(21) Numéro de dépôt: 21200449.3
(22) Date de dépôt: 01.10.2021
(51) Int. Cl.: H05K 7/20, F28F 13/00, B64G 1/50

(54) **INTERRUPTEUR THERMIQUE À ACTIONNEUR PASSIF POUR LIAISON THERMIQUE ENTRE DEUX ÉLÉMENTS, SYSTÈME EMBARQUÉ COMPRENANT UN TEL INTERRUPTEUR**

(30) Priorité: 02.10.2020 FR 2010100
(71) Demandeur: Commissariat à l'Energie Atomique et aux Energies Alternatives, 75015 Paris (FR)
(72) Inventeur: CHAMPEL, Bénédicte, 38054 GRENOBLE (FR); CARPIER, Sébastien, 92350 LE PLESSIS-ROBINSON Cedex (FR); DUCROS, Frédéric, 38054 GRENOBLE (FR); GRUSS, Jean-Antoine, 38170 SEYSSINET (FR); MARIOTTO, Mathieu, 38054 GRENOBLE (FR); PEIFFER, Raymond, 92350 LE PLESSIS-ROBINSON Cedex (FR)
(74) Mandataire: Nony

(57) **Abrégé**

L'invention concerne un interrupteur thermique, que l'on peut configurer réversible ou irréversible, qui consiste en deux couronnes concentriques chacune solidaire d'un élément (source froide ou source de chaleur), en contact surfacique (appui plan-plan), de préférence selon une zone annulaire continue, par le biais d'une pression de contact, afin d'établir la liaison thermique entre les deux éléments, cette liaison thermique étant interrompue par la désactivation thermique au-dessus d'une température seuil des moyens mécaniques d'application de la pression.

## Description

### Domaine technique

La présente invention concerne un interrupteur thermique à actionneur passif.

Tels que définis dans la publication [1], les dispositifs thermiques tels que les diodes, les régulateurs et les interrupteurs peuvent être définis par leurs fonctions de transfert, qui relient le flux de chaleur à la polarisation thermique (différence de températures), par analogie avec les courbes courant-tension dans le domaine électrique.

Par « interrupteur thermique », on entend le sens donné par la publication [1], à savoir un composant à deux bornes dont la relation entre le flux de chaleur qui la traverse et la différence de température entre ses deux bornes, dépend d'un paramètre de contrôle pouvant être thermique ou non, tel qu'un champ électrique, un champ magnétique ou une pression appliquée. Ce n'est donc pas un régulateur thermique ou encore une diode thermique définis également dans cette publication [1].

Une application avantageuse est la gestion thermique de systèmes embarqués dans lesquels une fonction d'interrupteur thermique est nécessaire. Une telle fonction se trouve notamment dans les domaines du spatial et de l'aéronautique dans lesquels on trouve des systèmes embarqués. Un système embarqué, dans des applications spatiales et aéronautiques, subit des phases de vie avec des conditions de température fortement variables, compatibles et non compatibles avec le bon fonctionnement des équipements. Typiquement, les systèmes embarqués intègrent de plus en plus de l'électronique éprouvée pour des applications civiles ou industrielles, pour des raisons de coûts et de disponibilité, mais qui réduisent la gamme d'utilisation en température des composants refroidis de 110°C à au mieux 80-85°C.

Bien que décrite en référence à cette application avantageuse, l'invention s'applique à toute autre application dans laquelle doit être mis en œuvre un interrupteur thermique réversible ou irréversible entre deux éléments.

### Technique antérieure

Dans de nombreux systèmes embarqués au sein d'appareils, l'extérieur d'un appareil peut constituer une source froide permettant la gestion thermique des composants internes au système. Il est alors nécessaire de mettre en place un chemin thermique performant entre les composants à refroidir et l'extérieur de l'appareil.

Cependant, il peut arriver que le contact thermique avec cette source froide extérieure devienne non souhaité pour un certain nombre de raisons (augmentation de la température extérieure, arrêt des composants à refroidir...).

La désactivation du lien thermique peut alors se faire en utilisant un interrupteur thermique, qui permet d'établir ou de supprimer une liaison thermique entre deux pièces distinctes. Cette désactivation peut nécessiter d'être réversible ou non, en fonction de la situation concernée.

Certains interrupteurs ont un mode d'actionnement actif : l'ouverture et la fermeture de l'interrupteur sont alors déclenchées par l'actionnement d'un moteur en fonction d'au moins une température seuil relevée par une sonde de température à laquelle le moteur est relié. Par exemple, les interrupteurs mécaniques ou les interrupteurs à gaz sont des interrupteurs thermiques à actionneur actif.

Les interrupteurs thermiques à actionneur actif ne sont pas forcément adaptés dans des situations rencontrées par les systèmes embarqués, pour des raisons de masse embarquée, de complexité, et/ou de durabilité. En effet, un tel interrupteur doit comporter un dispositif de mesure, un dispositif de traitement de la mesure, et un apport d'énergie pour réaliser le mouvement.

Parmi les interrupteurs thermiques à actionneur actif, on peut citer la demande de brevet EP3450325A1 qui divulgue un interrupteur thermique à actionneur électromagnétique couplé à une mesure de température.

US9704773B2 décrit pour une application de système embarqué au sein d'un véhicule, un rupteur thermique à actionneur électrique, pneumatique, électromagnétique ou autre, qui réalise le déplacement d'un élément conducteur pour sélectivement mettre en contact un élément dissipateur de chaleur avec un élément récupérateur de chaleur, ou supprimer le lien thermique entre eux.

On connait différents types d'interrupteur thermique à actionneur passif, dont notamment ceux mettant en œuvre des alliages à mémoire de forme, et ceux comprenant des éléments bimétalliques.

Parmi les interrupteurs thermiques à alliages à mémoire de forme, on peut citer la demande de brevet US2017/0038159A1 qui décrit l'utilisation d'un matériau à mémoire de forme pour coupler ou désaccoupler deux éléments d'un même chemin thermique, en fonction de la température.

Les alliages à mémoire de forme regroupent un ensemble d'alliages métalliques présentant des propriétés particulières, notamment la superélasticité et l'effet mémoire.

Cependant, leurs inconvénients sont nombreux, on peut les résumer ainsi :
- leur coût est encore très élevé ;
- ils sont très difficiles à intégrer dans une structure : on peut difficilement les souder en raison de leurs modifications à haute température ;
- quand ils sont chauffés plusieurs fois, leurs propriétés se modifient de manière imprévisible.

Parmi les interrupteurs thermiques à éléments bimétalliques, US4304294 divulgue un interrupteur thermique réversible fonctionnant par le changement de forme concave en convexe de disques bimétalliques à une certaine température, ce qui permet d'ouvrir ou fermer un chemin thermique vers l'extérieur.

US9025333B1 décrit un interrupteur thermique à structure cellulaire thermoélastique qui permet de réaliser un comportement thermique ajustable en fonction de la température. La structure comporte des éléments bimétalliques opposés qui se plient en réponse aux changements de température et, au-dessous d'une température seuil, sont séparés, et au-dessus de celle-ci, se plient pour entrer en contact.

Les interrupteurs thermiques à éléments bimétalliques sont actuellement très utilisés dans des circuits électriques, dans lesquels un interrupteur coupe une liaison électrique (disjoncteurs thermiques, thermostats dans les radiateurs électriques...).

Mais, en raison de leur faible épaisseur, leur résistance thermique peut être élevée, ce qui limite leur utilisation dans des applications où l'interrupteur coupe une liaison thermique. Pour avoir un bon contact thermique entre deux surfaces, même en intercalant des matériaux d'interface, il est nécessaire d'assurer une pression de contact de plusieurs bars.

Dans les cas particuliers où le contact thermique entre la source de chaleur et le puits de chaleur est de forme circulaire, assurer une pression radiale élevée est particulièrement délicat à mettre en œuvre.

Il existe donc un besoin d'améliorer les interrupteurs thermiques à actionneur passif, notamment afin de garantir de manière simple et efficace une pression de contact surfacique élevée at ainsi obtenir un bon contact thermique entre deux éléments qu'on cherche à lier thermiquement, et ce avec un fonctionnement possible en mode réversible ou irréversible.

Le but de l'invention est de répondre au moins en partie à ce besoin.

### Exposé de l'invention

Pour ce faire, l'invention concerne, sous l'un de ses aspects, un interrupteur thermique de type à actionneur passif, pour établir ou interrompre une liaison thermique entre deux éléments, comprenant :
- une première couronne destinée à être solidaire d'un des deux éléments ;
- une deuxième couronne destinée à être solidaire de l'autre des deux éléments ; les première et deuxième couronnes étant concentriques en délimitant entre elles au moins une zone de contact surfacique lorsqu'elles sont en contact;
- un ou plusieurs moyens d'application de pression de contact, le(s) moyen(s) étant activé(s) lorsqu'ils sont au-dessous d'une température seuil, pour maintenir les première et deuxième couronnes en contact selon au moins une zone de contact surfacique, et désactivés lorsqu'ils sont au-dessus de la température seuil, pour éloigner la première couronne de la deuxième couronne.

Les première et deuxième couronnes peuvent être des couronnes cylindriques.

La couronne de plus petite dimension peut être une partie annulaire d'un disque plat ou d'une portion de celui-ci fixé à l'un des éléments, tel qu'un boitier d'équipement électronique. La zone de contact surfacique est de préférence une zone annulaire continue.

Selon un premier mode de réalisation avantageux, les moyens d'application de pression de contact comprennent :
- au moins un premier ressort de compression, logé dans une cavité borgne de l'une et/ou l'autre des première et deuxième couronnes;
- au moins un deuxième ressort de compression, agencé à l'extérieur de la première ou la deuxième couronne, le premier et le deuxième ressort étant dans un état compressé au-dessous de la température seuil, le deuxième ressort étant configuré pour exercer, dans un état compressé, un effort supérieur à l'effort exercé par le premier ressort, et ainsi mettre en contact les première et deuxième couronnes selon au moins la zone de contact surfacique;
- au moins une pièce en matériau thermosensible dont les propriétés mécaniques sont modifiées au-dessus de la température seuil, de sorte à décompresser le premier ressort de compression sur une plus grande course que le deuxième ressort et par-là éloigner la première couronne de la deuxième couronne. Selon ce premier mode, le fonctionnement de l'interrupteur thermique est irréversible.

Selon ce premier mode, chacun des premier et deuxième ressorts de compression est de préférence un ressort hélicoïdal, un ensemble de rondelles Belleville ou un ressort ondulé.

Selon ce premier mode également, l'interrupteur thermique comprend avantageusement une tige de liaison, autour de laquelle sont montés les premier et deuxième ressorts, la tige étant insérée dans les première et deuxième couronnes en étant maintenue mécaniquement à ses deux extrémités au-dessous de la température seuil, avec possibilité de coulissement au-dessus de la température seuil.

Avantageusement, la tige est filetée à au moins l'une de ses extrémités qui est vissée à un écrou à l'extérieur de la deuxième couronne et, au-dessous de la température seuil, l'autre de ses extrémités formant un épaulement maintient la pièce en matériau thermosensible à l'extérieur de la première couronne.

Selon une première variante avantageuse, le matériau thermosensible de la pièce est un Matériau à Changement de Phase (MCP) au-dessus de la température seuil. Le matériau peut être de la paraffine, ou un MCP métallique, tel un métal de Wood ou un alliage métallique, du type de ceux commercialisés par la société Indium Corporation (https://www.indium.com/products/solders/#solder-preforms).

Selon cette première variante, il est prévu un bac de collecte pour collecter le Matériau à Changement de Phase (MCP) sous sa forme liquide au-dessus de la température seuil. Le bac de collecte peut être conformé en capot. Ainsi, avec ce bac, on empêche que le MCP fondu ne migre dans l'espace situé entre le premier élément, par exemple une virole et le deuxième élément, par exemple un boîtier logeant des composants électroniques. Il est également possible d'ajouter un élément poreux afin de piéger le MCP lorsqu'il sera fondu. Selon une deuxième variante avantageuse, le matériau thermosensible de la pièce est un matériau dont le module d'Young et/ou la limite d'élasticité chute(nt) au-dessus de la température seuil. Il peut s'agir d'un matériau dont le module d'Young chute drastiquement au-dessus de la température seuil recherchée, comme par exemple un élastomère ou un thermoplastique. Il peut s'agir aussi d'un matériau de module d'Young élevé à basse température mais dont la limite d'élasticité chute au-dessus de la température seuil recherchée, comme par exemple un poly(téréphtalate d'éthylène) (PET) amorphe. Dans cette variante, le matériau ne coulant pas, il n'est pas nécessaire de prévoir un capot comme selon la première variante.

Selon un deuxième mode de réalisation avantageux, le(s) moyen(s) d'application de pression de contact compren(nent)d :
- au moins un liquide remplissant une cavité étanche réalisée au moins en partie dans l'une des première et deuxième couronnes; le liquide étant apte à se vaporiser au-dessus de la température seuil ;
- au moins un piston fermant la cavité étanche et monté coulissant dans l'une des première et deuxième couronnes, tandis que la tige de piston est liée de manière permanente à l'autre des première et deuxième couronnes;
- au moins un ressort de compression configuré de sorte que, lorsque le liquide est au-dessous de la température seuil, il exerce un effort pour mettre en contact les première et deuxième couronnes selon au moins la zone de contact surfacique, et lorsque le liquide est au-dessus de la température seuil, il exerce un effort moindre à celui du piston en déplacement sous l'effet de la vaporisation, et qui éloigne la première couronne de la deuxième couronne .

Dans ce mode, le contenant du fluide peut avoir une forme adaptée. En particulier, on peut faire en sorte qu'il soit proche de la paroi externe de la virole, et donc qu'il réagisse rapidement à une variation de température externe.

Une variante avantageuse est d'enfermer le fluide dans un soufflet, par exemple un soufflet à diaphragme ou un soufflet métallique. Cela permet d'assurer efficacement l'étanchéité du système.

Selon ce deuxième mode, le fonctionnement de l'interrupteur thermique est réversible. Ainsi, lorsque la température passe au-dessous de la température de condensation, le fluide retourne à l'état liquide, ce qui relâche le ressort de compression qui va déplacer le piston dans le sens de rapprochement de la première couronne vers la deuxième couronne jusqu'à leur contact surfacique. Selon ce mode, la température seuil peut être avantageusement réglée par la pression initiale dans la cavité étanche.

Selon ce deuxième mode, le liquide est de préférence de l'eau, éventuellement additionnée de composés chimiques. L'ajout des composés chimiques est avantageusement réalisé en fonction des spécifications de l'environnement dans lequel l'interrupteur thermique est destiné à opérer. Il peut s'agir d'antigel par exemple ou d'additifs anti-corrosion. Le liquide peut également être un autre fluide que l'eau, avec une densité de sa phase gazeuse très inférieure à la densité de sa phase liquide.

Selon un troisième mode de réalisation avantageux,
- l'interrupteur thermique comprend un dispositif de guidage en translation longitudinale de la première par rapport à la deuxième couronne, agencé dans une zone centrale à l'extérieur de la deuxième couronne,
- les moyens d'application de pression de contact comprennent :
   au moins un ressort de compression, configuré pour exercer, dans un état compressé, un effort de mise en contact des première et deuxième couronnes cylindriques selon au moins la zone de contact surfacique;
   des moyens de verrouillage/déverrouillage mécanique du dispositif de guidage configurés de sorte que lorsqu'au moins une partie d'entre eux est au-dessous de la température seuil,
   ils verrouillent le guidage pour mettre en contact les première et deuxième couronnes cylindriques selon au moins la zone de contact surfacique, et au-dessus de la température seuil, ils déverrouillent le guidage de sorte à modifier l'état compressé du ressort de compression, et par-là éloigner la première couronne cylindrique de la deuxième couronne.

Selon ce troisième mode, le fonctionnement de l'interrupteur thermique est irréversible.

Selon ce troisième mode, les moyens de verrouillage/déverrouillage comprennent au moins un organe de verrouillage/déverrouillage et une sonde de température dite passive, comprenant un boitier renfermant un Matériau à Changement de Phase (MCP) apte à se dilater au-dessus de la température seuil, et un câble relié d'une part au boitier et d'autre part à l'(es) organe(s) de verrouillage de telle sorte qu'au-dessus de la température seuil le câble exerce une traction sur l'(es) organe(s) de verrouillage.

Selon une première variante avantageuse,
- le ressort de compression est logé entre la deuxième couronne et un support destiné à être solidaire du premier élément;
- l'organe de verrouillage est un crochet de verrouillage auquel est directement fixé le câble, le crochet étant monté pivotant entre la position de verrouillage dans laquelle il est en prise avec une gorge de verrouillage pratiquée dans le dispositif de guidage et la position de déverrouillage dans laquelle il est libéré de la gorge, le ressort de compression étant décompressé dans la position de déverrouillage du crochet.

Selon une deuxième variante avantageuse, les organes de verrouillage comprennent une fourchette à laquelle est directement fixé le câble et des billes de verrouillage, la fourchette étant montée pivotante entre la position de verrouillage dans laquelle elle maintient le ressort dans son état compressé de mise en contact, avec les billes logées dans une gorge du dispositif de guidage et la position de déverrouillage dans laquelle elle libère les billes de la gorge, le ressort de compression étant davantage compressé dans la position de déverrouillage du crochet.

Selon un quatrième mode de réalisation avantageux, les moyens d'application de pression de contact comprennent:
- au moins un premier ressort de compression, logé dans une cavité borgne de l'une et/ou l'autre des première et deuxième couronnes;
- au moins un second ressort de compression agencé à l'extérieur de la première ou la deuxième couronne, le premier et le deuxième ressort étant dans un état compressé au-dessous de la température seuil, le deuxième ressort étant configuré pour exercer, dans un état compressé, un effort supérieur à l'effort exercé par le premier ressort et ainsi mettre en contact les première et deuxième couronnes selon au moins une la zone de contact surfacique;
- au moins un tirant de liaison, autour duquel sont montés les premier et deuxième ressorts, le tirant étant inséré dans les première et deuxième couronnes en étant maintenu mécaniquement à ses deux extrémités au-dessous de la température seuil, avec possibilité de coulissement au-dessus de la température seuil,
- des billes bloquées dans au moins une gorge périphérique du tirant de liaison par un matériau MCP dont la température de fusion est la température seuil et débloquées au-dessus de celle-ci de sorte à décompresser le premier ressort de compression sur une plus grande course que le deuxième ressort, et par-là éloigner la première couronne de la deuxième couronne.

Selon ce quatrième mode, le fonctionnement de l'interrupteur est irréversible. Avantageusement, les première et deuxième couronnes sont en un alliage métallique choisi parmi un alliage d'aluminium, de cuivre, de titane, un acier inoxydable ou une combinaison de ceux-ci. Les deux couronnes peuvent être réalisées dans un matériau différent. Avantageusement encore, l'une et/ou l'autre des première et deuxième couronnes est(sont) revêtue(s) d'un ou plusieurs matériau(x) d'interface thermique dans la(es) zone(s) de contact surfacique. De préférence, le(s) matériau(x) d'interface est(sont) choisi(s) parmi une graisse thermique, une feuille en alliage métallique mou, un matériau fusible, un polymère chargé ou une combinaison de ceux-ci.

Selon une variante avantageuse, l'interrupteur thermique comprend au moins un ressort de compression configuré pour exercer un effort tendant à rapprocher les première et deuxième couronnes, le ressort de compression étant de préférence un ressort hélicoïdal, un ensemble de rondelles Belleville ou un ressort ondulé, le ressort de compression étant de préférence agencé entre la deuxième couronne et un support solidaire de la première couronne, de préférence en appui contre la deuxième couronne et le support.

L'invention concerne également un système comprenant :
- un élément formant une source froide ;
- un élément formant une source de chaleur ;
- un interrupteur thermique pour établir ou interrompre une liaison thermique entre les sources froides et de chaleur tel que décrit précédemment.

Selon un mode de réalisation avantageux, la première couronne de plus grande dimension que la deuxième couronne est solidaire de la source froide, tandis que la deuxième couronne est solidaire de la source de chaleur.

Selon une configuration avantageuse, la source de chaleur est un équipement comprenant un boitier logeant au moins un composant électronique, autour duquel est fixée la deuxième couronne.

Selon un mode de réalisation avantageux, le système comprend au moins un dispositif de stockage thermique agencé sur au moins l'une des parois du boitier pour absorber la puissance thermique dissipée par le(s) composant(s) électronique(s), lorsque la liaison thermique est interrompue. Le dispositif de stockage thermique permet ainsi d'absorber la puissance thermique dissipée par les composants internes au boitier, et donc de limiter leur élévation de température, lorsque le chemin thermique avec l'extérieur est rompu. Ce matériau de stockage thermique comprend de préférence un Matériau à Changement de Phase (MCP) utilisant la chaleur latente de fusion d'un matériau. Le matériau à changement de phase peut être une paraffine. D'autres MCP sont envisageables : sels, sucres, matériaux à transition solide-solide.

Avantageusement, le matériau MCP utilisé possède une température de fusion inférieure à la température maximale autorisée pour le(s) composant(s) électronique(s).

On peut également utiliser la chaleur sensible des structures du boitier en tant que matériau de stockage.

Selon une configuration avantageuse, la source froide est une virole à l'intérieur de laquelle la première couronne est fixée.

Selon un mode de réalisation avantageuse, le système comprend des moyens de guidage fixés au boitier pour guider en translation ce dernier à l'intérieur de la virole lors de l'éloignement ou rapprochement entre première couronne et deuxième couronne. Ainsi, les moyens de guidage permettent de contrôler le déplacement relatif entre couronnes.

Le système peut constituer avantageusement un système embarqué.

L'invention concerne également l'utilisation du système embarqué dans le domaine spatial et/ou de l'aéronautique et/ou du transport.

Ainsi, l'invention consiste essentiellement en un interrupteur thermique, que l'on peut configurer réversible ou irréversible, qui consiste en deux couronnes concentriques chacune solidaire d'un élément (source froide ou source de chaleur), en contact surfacique (appui plan-plan), de préférence selon une zone annulaire continue, par le biais d'une pression de contact, afin d'établir la liaison thermique entre les deux éléments, cette liaison thermique étant interrompue par la désactivation thermique au-dessus d'une température seuil des moyens mécaniques d'application de la pression.

Les avantages d'un interrupteur mécanique à actionneur passif selon l'invention sont nombreux parmi lesquels on peut citer :
- une moindre complexité de réalisation d'un système embarqué qui met en œuvre l'interrupteur selon l'invention, en limitant le nombre de pièces additionnelles, et en supprimant le besoin d'énergie ;
- le maintien d'un chemin thermique performant lorsque l'interrupteur est dans la configuration de conduction thermique, car d'une part la zone surfacique de contact peut être importante et d'autre part la pression de contact est appliquée par appui plan-plan entre les deux couronnes et donc les deux éléments à lier thermiquement, ce qui permet de limiter la résistance de contact à l'interface, résistance qui peut être encore réduite par l'utilisation de matériaux d'interface appropriés. Cette pression peut être notablement plus élevée qu'un interrupteur à pression radiale selon l'état de l'art, et ce, sans risque de coincement.
- une simplicité de mise en œuvre avec une robustesse.

D'autres avantages et caractéristiques de l'invention ressortiront mieux à la lecture de la description détaillée d'exemples de mise en œuvre de l'invention faite à titre illustratif et non limitatif en référence aux figures suivantes.

### Brève description des dessins

[Fig 1] la figure 1 est une vue schématique en perspective d'un système embarqué intégrant un exemple d'interrupteur thermique passif selon l'invention.
[Fig 2A] la figure 2A est une vue schématique en coupe longitudinale d'un système embarqué intégrant un interrupteur thermique passif selon l'invention dans un mode de réalisation irréversible; la figure 2A montrant l'interrupteur en configuration fermée selon laquelle il établit une liaison thermique.
[Fig 2B] la figure 2B reprend la figure 2A mais en montrant l'interrupteur en configuration ouverte selon laquelle il coupe la liaison chemin thermique.
[Fig 3A] la figure 3A est une vue schématique illustrant une variante de la figure 2A.
[Fig 3B] la figure 3B reprend la figure 3A mais en montrant l'interrupteur en configuration ouverte selon laquelle il coupe la liaison chemin thermique.
[Fig 4A] la figure 4A est une vue schématique en coupe longitudinale d'un système embarqué intégrant un interrupteur thermique passif selon l'invention dans un mode de réalisation réversible; la figure 4A montrant l'interrupteur en configuration fermée selon laquelle il établit une liaison thermique.
[Fig 4B] la figure 4B reprend la figure 4A mais en montrant l'interrupteur en configuration ouverte selon laquelle il coupe la liaison chemin thermique.
[Fig 5A] la figure 5A est une vue schématique illustrant une variante de la figure 4A.
[Fig 5B] la figure 5B reprend la figure 5A mais en montrant l'interrupteur en configuration ouverte selon laquelle il coupe la liaison chemin thermique.
[Fig 6A] la figure 6A est une vue schématique en coupe longitudinale d'un autre mode de réalisation irréversible d'un système selon l'invention; la figure 6A montrant l'interrupteur en configuration fermée selon laquelle il établit une liaison thermique.
[Fig 6B] la figure 6B reprend la figure 6A mais en montrant l'interrupteur en configuration ouverte selon laquelle il coupe la liaison chemin thermique.
[Fig 7A] la figure 7A est une vue de détail de la figure 6A.
[Fig 7B] la figure 7B est une vue de détail de la figure 6B.
[Fig 8A] la figure 8A est une vue schématique illustrant une variante de la figure 6A.
[Fig 8B] la figure 8B reprend la figure 8A mais en montrant l'interrupteur en configuration ouverte selon laquelle il coupe la liaison chemin thermique.
[Fig 8C] la figure 8C est une vue schématique en coupe transversale de la figure 8A.
[Fig 8D] la figure 8D montre le principe d'activation de l'interrupteur selon les figures 8A à 8C.
[Fig 9A] la figure 9A est une vue schématique en coupe longitudinale d'un autre mode de réalisation irréversible d'un système selon l'invention; la figure 9A montrant l'interrupteur en configuration fermée selon laquelle il établit une liaison thermique.
[Fig 9B] la figure 9B reprend la figure 9A mais en montrant l'interrupteur en configuration ouverte selon laquelle il coupe la liaison chemin thermique.
[Fig 10A] la figure 10A est une vue de détail de la figure 9A.
[Fig 10B] la figure 10B est une vue de détail de la figure 9B.
[Fig 11] la figure 11 est une vue schématique montrant un mode de réalisation avantageux du système embarqué avec un dispositif de stockage thermique.
[Fig 12] la figure 12 est une vue schématique montrant un mode de réalisation avantageux du système embarqué avec des moyens de guidage en translation entre éléments du système lors de l'activation passive de l'interrupteur thermique.
[Fig 13] la figure 13 est une reproduction de simulation de profil thermique d'un premier exemple d'extérieur du boitier d'un système embarqué, à la fin d'un scénario thermique (Cas 0).
[Fig 14] la figure 14 est une reproduction de simulation de profil thermique d'un deuxième exemple d'extérieur du boitier d'un système embarqué, à la fin d'un scénario thermique (Cas 1).
[Fig 15] la figure 15 est une reproduction de simulation de profil thermique d'un troisième exemple d'extérieur du boitier d'un système embarqué, à la fin d'un scénario thermique (Cas 2).
[Fig 16] la figure 16 est une reproduction de simulation de profil thermique d'un quatrième exemple d'extérieur du boitier d'un système embarqué, à la fin d'un scénario thermique (Cas 3).
[Fig 17] la figure 17 illustre sous forme d'une courbe, pour les différents exemples avec ou sans interrupteur thermique et / ou stockage thermique selon l'invention relatifs aux figures 13 à 16, l'évolution thermique du boitier d'un système embarqué au cours de la première phase du scénario thermique.
[Fig 18] la figure 18 illustre sous forme de courbes, pour différents exemples avec ou sans interrupteur thermique et / ou stockage thermique selon l'invention relatifs aux figures 13 à 16, l'évolution thermique du boitier d'un système embarqué au cours d'une deuxième phase du scénario thermique.

Les différents scénarios et conditions thermiques seront précisés ci-après.

### Description détaillée

Dans l'ensemble des exemples illustrés, un même élément est désigné par une même référence numérique.

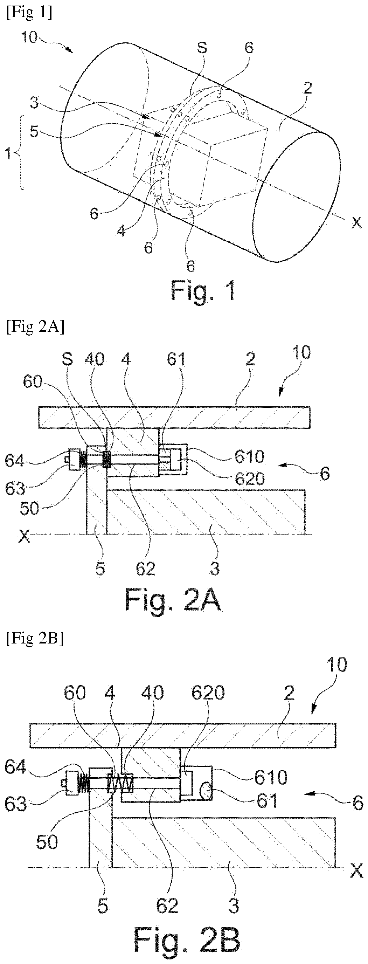

Un système embarqué 10 intégrant un interrupteur thermique passif 1 selon l'invention est décrit en figure 1.

Le système embarqué 10 est de préférence symétrique de révolution autour d'un axe central X.

Le système embarqué 10 comprend en tant qu'éléments à lier ou à séparer thermiquement respectivement, en tant que source froide, une virole 2 et, en tant que source de chaleur, un boitier 3 d'équipement électronique, agencé à l'intérieur de la virole 2 et logeant un ou plusieurs composants électroniques qui dégagent en fonctionnement une puissance thermique.

L'interrupteur thermique passif 1 selon l'invention comprend une première couronne 4 fixée à l'intérieur de la virole 2 et une deuxième couronne 5, concentrique à la première couronne 4, fixée au boitier 3. Les couronnes ont de préférence une même section transversale rectangulaire sur toute leur périphérie. Comme illustré, la couronne 5 de plus petite dimension peut être une partie annulaire d'une portion d'un disque plat fixé au boitier 3. Les couronnes 4 et 5 sont en alliage métallique, par exemple, un alliage d'aluminium, de cuivre, de titane, un acier inoxydable. La première couronne 4 peut être en un alliage métallique différent de celui de la deuxième couronne 5.

Les couronnes 4 et 5 sont agencées relativement entre elles pour délimiter une zone annulaire S de contact surfacique lorsqu'elles sont en contact.

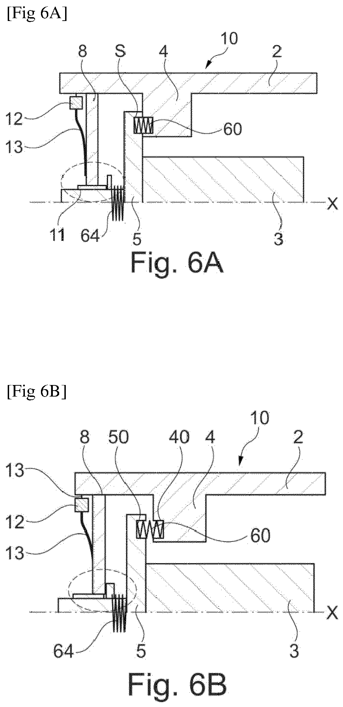

Selon l'invention, l'interrupteur thermique 1 comprend une pluralité de moyens 6 d'application de pression de contact répartis uniformément sur toute la périphérie de la zone annulaire S. Un seul moyen 6 d'application de la pression de contact peut être également prévu dans une zone centrale, comme détaillé ci-après en référence aux figures 6A à 8D. Ces moyens 6 sont activés lorsqu'ils sont au-dessous d'une température seuil, pour maintenir les couronnes 4 et 5 en contact selon leur zone de contact surfacique S, et désactivés lorsqu'ils sont au-dessus de la température seuil, pour éloigner la première couronne 4 de la deuxième couronne 5.

Les figures 2A et 2B montrent un exemple d'interrupteur thermique irréversible avec un des moyens 6 d'application de la pression de contact.

Un premier ressort de compression 60 est logé dans une cavité borgne 40, 50 à la fois de la première et deuxième couronnes 4 et 5.

Un deuxième ressort de compression 64 est agencé à l'extérieur de la deuxième couronne 5. Comme montré en figure 2A, le premier et le deuxième ressorts 60, 64 sont dans un état compressé au-dessous de la température seuil. Le deuxième ressort 64 est configuré pour exercer, dans un état compressé, un effort supérieur à l'effort exercé par le premier ressort 60 et ainsi mettre en contact les première et deuxième couronnes 4 et 5, selon au moins leur zone de contact surfacique S..

La pièce 61 est en un matériau thermosensible dont les propriétés mécaniques sont modifiées au-dessus de la température seuil. Le matériau de la pièce 61 peut être un Matériau à Changement de Phase (MCP) au-dessus de la température seuil, tel qu'un MCP métallique ou une paraffine ou un matériau dont le module d'Young et/ou la limite d'élasticité chute(nt) au-dessus de la température seuil, tel qu'un élastomère.

Une tige de liaison 62, autour de laquelle sont montés les deux ressorts 60, 64 est montée traversante à travers les première et deuxième couronnes 4 et 5, avec possibilité de coulissement au-dessus de la température seuil. La tige 62 est filetée à l'une de ses extrémités qui est vissée à un écrou 63 à l'extérieur de la couronne 5 et, elle est liée à l'autre de ses extrémités formant un épaulement 620 en contact avec la pièce en matériau thermosensible 61 à l'extérieur de la couronne 4.

Ainsi, comme illustré en figure 2A, au-dessous de la température seuil, les couronnes 4 et 5 sont maintenues en contact surfacique par la tige 62, maintenue d'une part par l'écrou vissé 63 et d'autre part, par la pièce de mise en contact mécanique 61 qui est intercalé entre l'épaulement 620 de la tige 62 et la couronne 4 La pièce 61 de forme initiale annulaire autour de la tige 62 peut être liée à cette dernière ou juste montée autour. Dans le cas où la pièce 61 est liée à la tige 62, elle peut l'être par surmoulage, par ajustement serré, par vissage ou tout autre moyen.

Comme illustré en figure 2B, au-dessus de la température seuil, les propriétés de la pièce 61 sont modifiées de sorte que la tige 62 n'est plus maintenue du côté de son épaulement 620 du fait que le volume de la pièce 61 qui formait initialement une entretoise est réduit voire nul. Ainsi, les ressorts 60, 64 sont décomprimés, et l'effort du ressort 60 supérieur à celui du ressort 64, exerce une force de poussée qui éloigne la première couronne 4 de la deuxième couronne 5. Ce mode est irréversible car la modification de forme de la pièce 61 est irréversible .

Dans l'exemple illustré des figures 2A et 2B, la pièce 61 est en Matériau à Changement de Phase (MCP) qui fond au-dessus de la température seuil et donc libère complètement le volume entre l'épaulement 620 de la tige 62 et la couronne 4.

Pour collecter le MCP liquide et ainsi assurer une parfaite étanchéité vis-à-vis du reste du système embarqué 10, un bac de collecte 610 formant ici un capot est agencé avec étanchéité autour de la tête de la tige 62 (épaulement 620) en étant lié à la couronne 4. Comme visible sur la figure 2B, le MCP 61 après avoir fondu est collecté par ce bac 610.

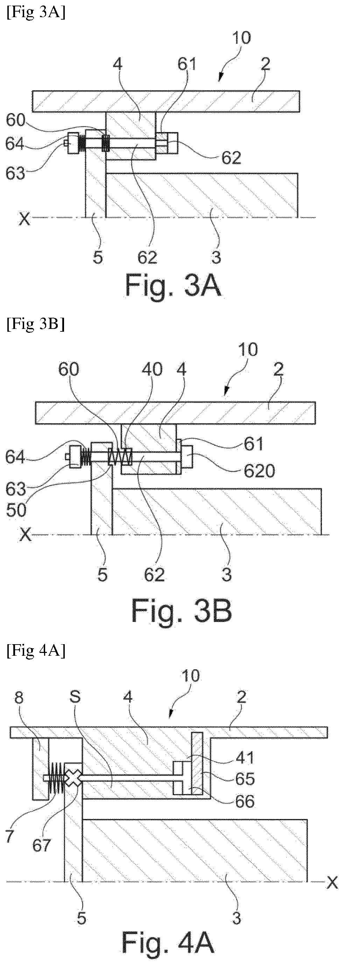

Dans l'exemple illustré des figures 3A et 3B, la pièce 61 est en élastomère dont le module d'Young et/ou la limite d'élasticité chute(nt) au-dessus de la température seuil ce qui libère donc une partie du volume entre l'épaulement 620 de la tige 62 et la couronne 4. Ici, contrairement à la variante des figures 2A et 2B, l'élastomère 61 aplati reste en place autour de la tige 62 après que l'activation de l'interrupteur a eu lieu. La variante des figures 3A et 3B ne nécessite pas de bac de collecte.

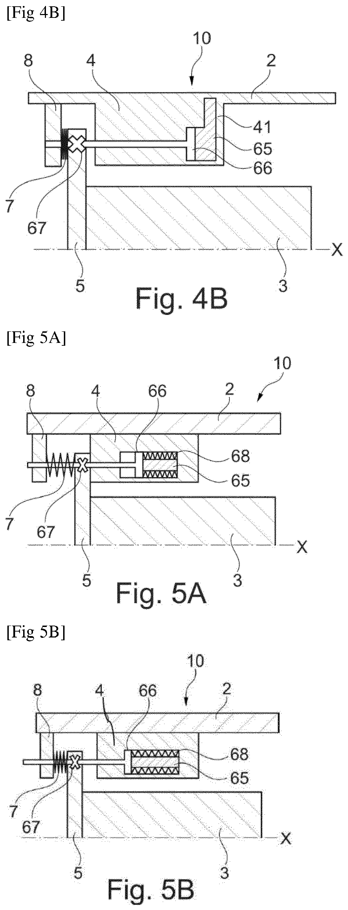

Les figures 4A et 4B montrent un exemple d'interrupteur thermique réversible avec un des moyens 6 d'application de la pression de contact.

Un liquide 65, apte à se vaporiser au-dessus de la température seuil, remplit une cavité étanche 41 réalisée dans la couronne 4. Le liquide peut être de l'eau, éventuellement additionnée de composés chimiques, comme un antigel, et des produits anti-corrosion. A titre d'exemple, l'antigel peut être choisi parmi la famille des glycols.

Un piston 66 fermant la cavité étanche 41 est monté coulissant dans la couronne 4 avec sa tige de piston 67 liée de manière permanente à la couronne 5 et pouvant coulisser à travers un support 8 formant une plaque d'appui.

Un ressort de compression 7 est monté autour de l'extrémité libre de la tige de piston 67 ,et est en appui contre la plaque d'appui 8 à l'extérieur de la couronne 5.

Ainsi, comme illustré en figure 3A, lorsque le liquide 65 est au-dessous de la température seuil, les couronnes 4 et 5 sont maintenues en contact surfacique d'une part par le ressort de compression 7 qui exerce un effort sur la couronne 5, et d'autre part, par le liquide 65 qui forme une butée de déplacement du piston 66.

Comme illustré en figure 3B, lorsque le liquide 65 atteint et passe au-dessus de la température seuil, il se vaporise et s'expanse pour déplacer le piston 66 avec un effort supérieur à celui exercé par le ressort 7, qui se comprime donc. Le déplacement du piston 66 éloigne la couronne 4 de la couronne 5.

Ce mode est réversible, car dès que la température à laquelle est soumis le fluide 65 redescend au-dessous de la température seuil, celui-ci revient à son état liquide initial avec un effort résultant sur le piston 66 qui est moindre que celui de l'effort exercé par le ressort 7, qui se décomprime ainsi et vient mettre à nouveau la couronne 5 en contact surfacique contre la couronne 4.

Les figures 5A et 5B montrent une variante de réalisation des figures 4A et 4B, selon laquelle le fluide 65 est contenu dans un soufflet métallique 68 fixé avec étanchéité dans la cavité de déplacement du piston 66. Il peut s'agir d'un soufflet métallique commercialisé par la société Witzenmann.

Les figures 6A à 7B montrent un autre exemple d'interrupteur thermique réversible avec un des moyens d'application de la pression de contact.

Ici, l'interrupteur thermique 10 comprend un dispositif de guidage 11 en translation longitudinale de la première 4 par rapport à la deuxième couronne 5, qui est agencé dans une zone centrale à l'extérieur de cette dernière.

Un premier ressort de compression 60 est logé dans une cavité borgne 40, 50 à la fois de la première et deuxième couronnes 4 et 5.

Un deuxième ressort de compression 64 est logé entre la deuxième couronne 5. et un support 8 solidaire de la virole 2. Ce ressort de compression 64 est configuré pour exercer, dans un état compressé, un effort de mise en contact des première et deuxième couronnes 4 et 5 selon au moins la zone de contact surfacique S.

Une sonde de température passive 12 est agencée dans le système 10. A titre d'exemple, la sonde passive à câble peut être celle utilisée en tant que câble de ralenti dans les véhicules automobiles. Il peut s'agir d'un câble de ralenti commercialisé par la société Vernet voir http://www.vernet.fr/PIECES-DE-RECHANGE/Cable-de-ralenti-accelere.

La sonde comprend un boitier 12 renfermant un Matériau à Changement de Phase (MCP) apte à se dilater au-dessus de la température seuil, et un câble 13 relié d'une part au boitier 12 et d'autre part un crochet de verrouillage 15 solidaire du support 8. Le boitier 12 peut par exemple être fixé au support 8 par l'intermédiaire d'une patte de fixation 14.

Plus précisément, le crochet de verrouillage 15 directement fixé au câble 13, est monté pivotant entre une position de verrouillage dans laquelle il est en prise avec une gorge de verrouillage 110 pratiquée dans le dispositif de guidage et une position de déverrouillage dans laquelle il est libéré de celle-ci.

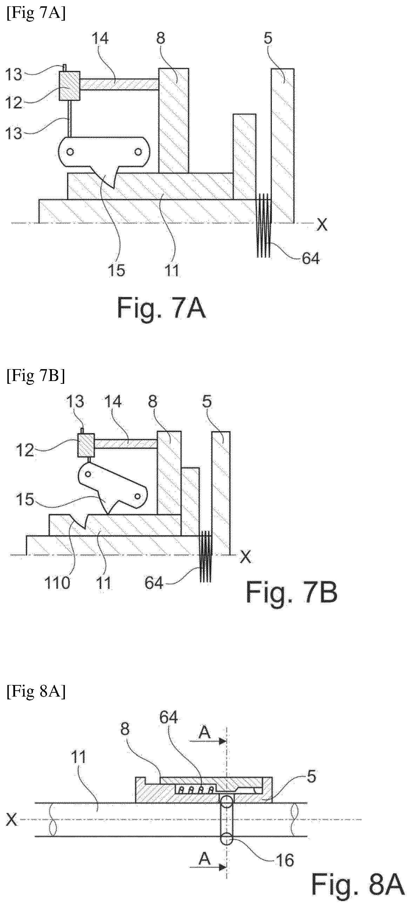

Comme illustré en figure 7B, lorsque la température dépasse la température seuil, le câble 13 rétrécit, et exerce ainsi une traction sur le crochet 15 qui pivote et se dégage ainsi de son logement 110, ce qui permet la décompression du ressort 64 dans la position de déverrouillage du crochet.

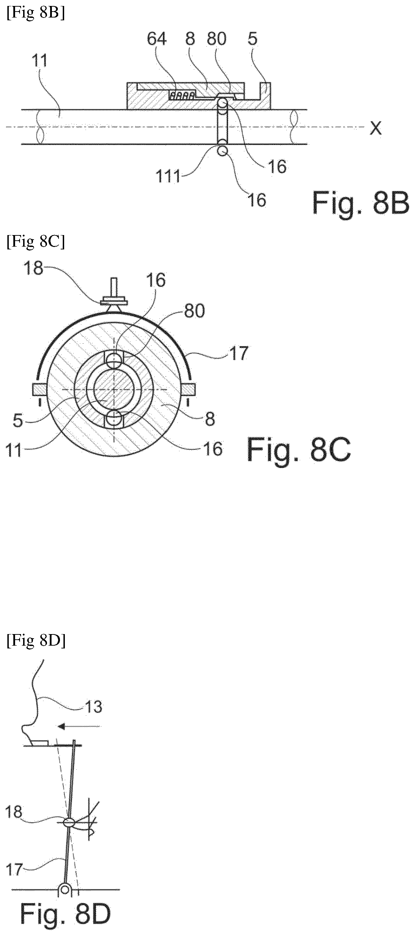

Les figures 8A à 8D illustrent une variante selon laquelle le crochet de verrouillage 15 est remplacé par un système de billes 16 actionné par une fourchette 17 en pivotement en tant qu'organes de verrouillage.

Plus précisément, il est prévu une fourchette 17 à laquelle est directement fixé le câble 13 et des billes de verrouillage 16.

La fourchette 17 est montée pivotante autour d'un axe 18 entre une position de verrouillage dans laquelle elle maintient le ressort 64 dans son état compressé de mise en contact, avec les billes logées dans une gorge 111 du dispositif de guidage (figure 8A) et la position de déverrouillage dans laquelle elle libère les billes 16 de la gorge 111 qui viennent se loger dans un décrochement 80 du support 8. Le pivotement de la fourchette 17 provoque la compression du ressort de compression 64.

Le fonctionnement de l'interrupteur thermique 10 selon ces figures 6A à 8D, est irréversible, car le câble 13 est tiré et les organes de verrouillage restent dans la position de déverrouillage.

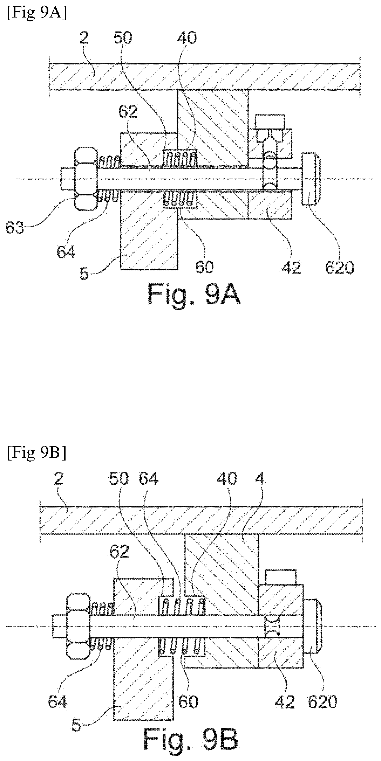

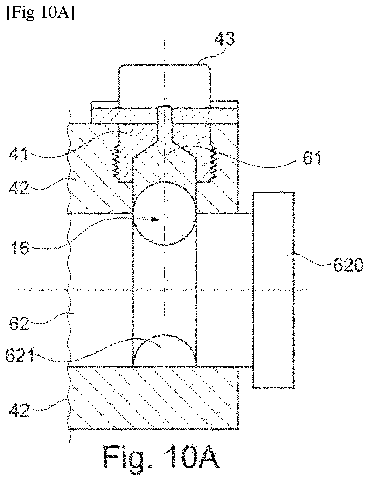

Les figures 9A à 10B montrent un autre exemple d'interrupteur thermique réversible avec un des moyens d'application de la pression de contact.

Un premier ressort de compression 60 est logé dans une cavité borgne 40, 50, à la fois de la première et deuxième couronnes 4 et 5.

Un deuxième ressort de compression 64 est logé entre la deuxième couronne 5. et un support 8 solidaire de la virole 2.

Comme montré en figure 9A, le premier et le deuxième ressorts 60, 64 sont dans un état compressé au-dessous de la température seuil. Le deuxième ressort 64 est configuré pour exercer, dans un état compressé, un effort supérieur à l'effort exercé par le premier ressort 60 et ainsi mettre en contact les première et deuxième couronnes 4 et 5, selon au moins leur zone de contact surfacique S.

Les ressorts 60, 64 sont montés autour d'un tirant de liaison 62 inséré dans les première et deuxième couronnes 4 et 5 en étant maintenu mécaniquement à ses deux extrémités au-dessous de la température seuil, avec possibilité de coulissement au-dessus de la température seuil.

Des billes 16 sont bloquées dans au moins une gorge périphérique 621 du tirant de liaison 62 par un matériau MCP métallique M dont la température de fusion est la température seuil. Plus précisément, le matériau MCP M est contenu dans une vis 41 percée intérieurement qui est vissée dans une pièce 42 solidaire de la couronne 4. Un capot 43 vient coiffer cette vis 41.

Au-dessus de la température seuil, le MCP fond et est évacué par le perçage central de la vis 41, les billes 16 exerçant une pression sur celui-ci peuvent échapper de la gorge périphérique. Le premier ressort de compression 60 est décompressé sur une plus grande course que le deuxième ressort 64, ce qui provoque l'écartement relatif entre la première couronne 4 et la deuxième couronne 5.

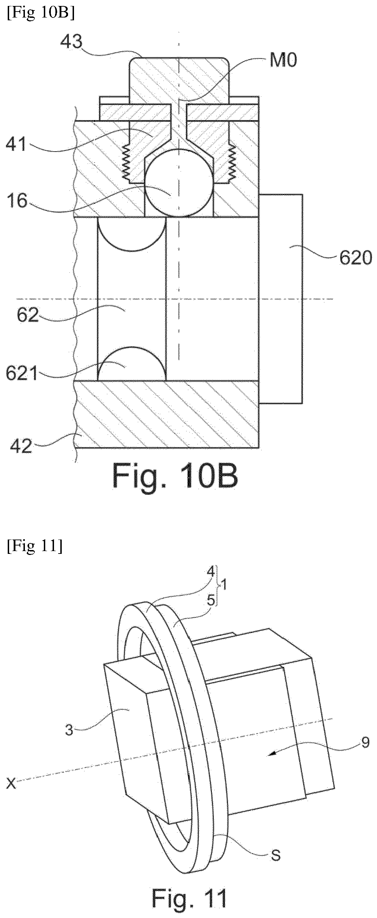

La figure 11 présente un mode de réalisation avantageux dans lequel un dispositif de stockage thermique 9 est intégré sur au moins une des parois du boitier 3. Ce dispositif de stockage thermique 9 permet d'absorber la puissance thermique dissipée par les éléments internes, et donc de limiter leur élévation de température, lorsque le chemin thermique avec l'extérieur est rompu.

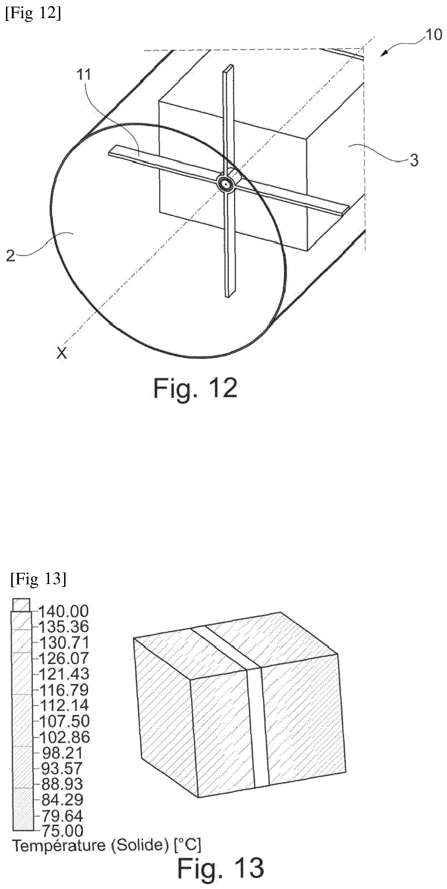

La figure 12 présente un exemple de dispositif de guidage longitudinal 11 du boitier 3 dans la virole 2.

Les inventeurs ont réalisé une simulation du fonctionnement thermique d'un système embarqué tel qu'il vient d'être décrit avec un interrupteur thermique selon l'invention et à titre de comparaison du même système sans interrupteur thermique selon l'invention.

Les exemples ci-dessous présentent l'évolution de la température dans le boitier 3 à refroidir au-cours d'un scénario thermique type comprenant deux phases distinctes pour différents cas.

Lors de la première phase la température extérieure est inférieure à la température maximum autorisée pour le(s) composant(s) électronique(s).

Lors de la deuxième phase la température extérieure est supérieure à la température maximum autorisée pour le(s) composant(s) électronique(s)

La puissance thermique dégagée par le boîtier est constante pendant les deux phases.
- Cas 0 : pas d'interrupteur thermique selon l'invention, pas de stockage thermique;
- Cas 1 : interrupteur thermique selon l'invention, pas de stockage thermique ;
- Cas 2 : pas d'interrupteur thermique selon l'invention, stockage thermique réalisé ;
- Cas 3 : interrupteur thermique selon l'invention, stockage thermique réalisé.

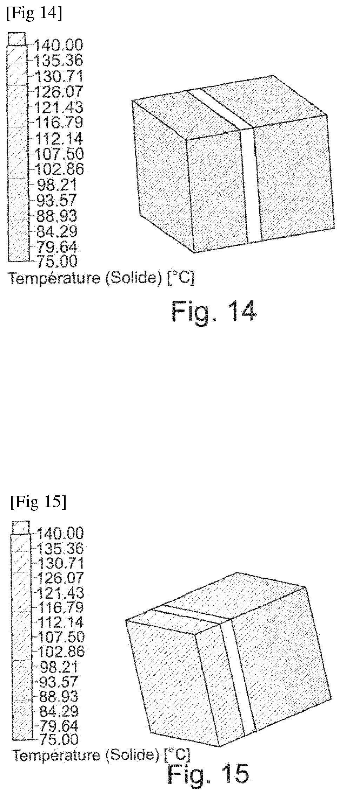

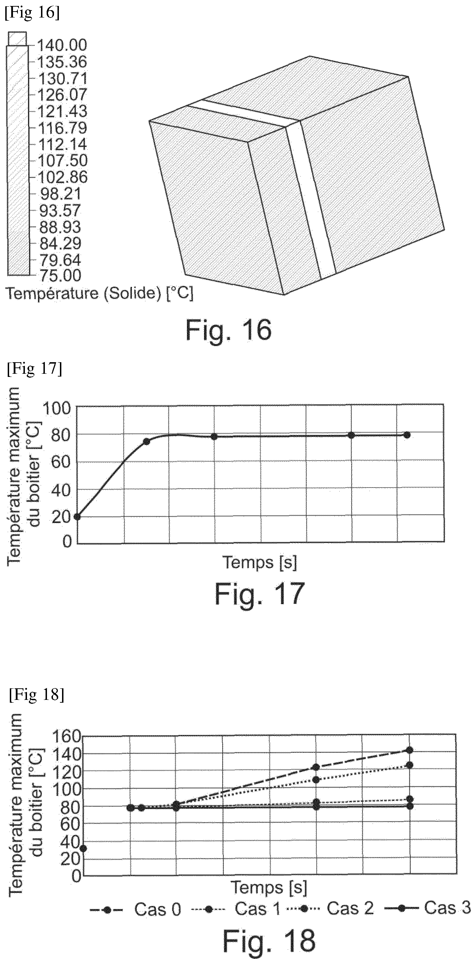

Le profil thermique de l'extérieur du boitier 3, tel que simulé à la fin du scénario thermique, est montré à la figure 13 pour le cas 0, figure 14 pour le cas 1, figure 15 pour le cas 2, figure 16 pour le cas 3.

L'évolution thermique du boitier 3, au cours de la première phase du scénario thermique, qui est la même pour les Cas 0 à Cas 3, est représentée en figure 17.

L'évolution thermique du boitier 3 au cours de la deuxième phase du scénario thermique, qui est différente pour chacun des Cas 0 à Cas 3, est représentée en figure 18.

De ces différentes figures 13 à 18, il ressort que le chemin thermique performant entre le boitier 3 et l'extérieur du système permet de limiter la température du boitier 3 lorsque l'extérieur de l'appareil est à une température raisonnable (première phase du scénario thermique).

Lorsque la température extérieure augmente (deuxième phase du scénario thermique), le boitier 3 se réchauffe sous l'effet de la température extérieure, et ce d'autant plus que le chemin thermique est de faible résistance.

La mise en place de l'interrupteur thermique 1 selon l'invention ne modifie pas l'évolution thermique du système dans la première phase du scénario.

En revanche, il permet de limiter l'augmentation de température du boitier 3 dans la deuxième phase, en empêchant le transfert de puissance thermique depuis l'extérieur du système. Le réchauffement de la température du boîtier 3 se fait à une vitesse environ 10 fois plus faible que dans le cas sans interrupteur thermique.

L'ajout du dispositif de stockage thermique 9 permet de limiter encore cet échauffement thermique. La puissance dégagée par le boitier 3 pendant la seconde phase du scénario est alors absorbée par le dispositif de stockage thermique 9.

L'invention n'est pas limitée aux exemples qui viennent d'être décrits ; on peut notamment combiner entre elles des caractéristiques des exemples illustrés au sein de variantes non illustrées.

D'autres variantes et améliorations peuvent être envisagées sans pour autant sortir du cadre de l'invention.

Si l'exemple décrit concerne un système embarqué, un interrupteur thermique réversible ou irréversible selon l'invention peut être mis en œuvre dans n'importe quel système pour établir ou interrompre une liaison thermique entre deux éléments entre eux, dont l'un constitue une source froide, typiquement l'environnement extérieur, et l'autre constitue une source de chaleur, typiquement un appareil.

Si dans l'ensemble des exemples illustrés, les première et deuxième couronnes sont cylindriques, l'invention s'applique à toutes couronnes concentriques, par exemple à des couronnes de section droite elliptique.

Les moyens d'application de la pression de contact peuvent être répartis uniformément sur la périphérie de la zone annulaire ou à l'inverse n'être concentrés que dans une zone centrale, à l'instar du mode des figures 6A à 8D.

### Liste des références citées

: Geoff Wehmeyer, Tomohide Yabuki, Christian Monachon, Junqiao Wu, and Chris Dames, "Thermal diodes, regulators, and switches: Physical mechanisms and potential applications ", Applied Physics Reviews 4, 041304 (2017).

## Revendications

1. Interrupteur thermique (1) de type à actionneur passif, pour établir ou interrompre une liaison thermique entre deux éléments (2, 3), comprenant :
- une première couronne (4), destinée à être solidaire d'un (2) des deux éléments ;
- une deuxième couronne (5), destinée à être solidaire de l'autre (3) des deux éléments; les première et deuxième couronnes étant concentriques, en délimitant entre elles au moins une zone de contact surfacique lorsqu'elles sont en contact;
- un ou plusieurs moyens (6) d'application de pression de contact, le(s) moyen(s) étant activés lorsqu'ils sont au-dessous d'une température seuil, pour maintenir les première et deuxième couronnes en contact selon leur au moins une zone de contact surfacique, et désactivés lorsqu'ils sont au-dessus de la température seuil, pour éloigner la première couronne de la deuxième couronne, les première et deuxième couronnes étant de préférence en un alliage métallique choisi parmi un alliage d'aluminium, de cuivre, de titane, un acier inoxydable ou une combinaison de ceux-ci.

2. Interrupteur thermique (1) selon la revendication 1,
le(s) moyen(s) (6) d'application de pression de contact comprenant :
- au moins un premier ressort de compression (60), logé dans une cavité borgne (30, 40) de l'une et/ou de l'autre des première et deuxième couronnes;
- au moins un deuxième ressort de compression (64), agencé à l'extérieur de la première ou la deuxième couronne, le premier et le deuxième ressorts étant dans un état compressé au-dessous de la température seuil, le deuxième ressort étant configuré pour exercer, dans un état compressé, un effort supérieur à l'effort exercé par le premier ressort et ainsi mettre en contact les première et deuxième couronnes selon au moins la zone de contact surfacique;
- au moins une pièce en matériau thermosensible dont les propriétés mécaniques sont modifiées au-dessus de la température seuil, de sorte à décompresser le premier ressort de compression sur une plus grande course que le deuxième ressort, et par là, éloigner la première couronne de la deuxième couronne,
ou
le(s) moyen(s) (6) d'application de pression de contact comprenant :
- au moins un liquide (65) remplissant une cavité étanche (41) réalisée au moins en partie dans l'une des première et deuxième couronnes; le liquide étant apte à se vaporiser au-dessus de la température seuil ;
- au moins un piston (66) fermant la cavité étanche et monté coulissant dans l'une des première et deuxième couronnes, tandis que la tige de piston (67) est liée de manière permanente à l'autre des première et deuxième couronnes;
- au moins un ressort de compression (7) configuré de sorte que, lorsque le liquide est au-dessous de la température seuil, il exerce un effort pour mettre en contact les première et deuxième couronnes selon au moins la zone de contact surfacique, et lorsque le liquide est au-dessus de la température seuil, il exerce un effort moindre à celui du piston en déplacement sous l'effet de la vaporisation, et qui éloigne la première couronne de la deuxième couronne,
ou
l'interrupteur thermique comprenant un dispositif de guidage (11) en translation longitudinale de la première (4) par rapport à la deuxième couronne (5), agencé dans une zone centrale à l'extérieur de la deuxième couronne, les moyens d'application de pression de contact comprenant :
- au moins un ressort de compression, configuré pour exercer, dans un état compressé, un effort de mise en contact des première et deuxième couronnes selon au moins la zone de contact surfacique ;
des moyens de verrouillage/déverrouillage mécanique du dispositif de guidage configurés de sorte que lorsqu'au moins une partie d'entre eux est dessous de la température seuil, ils verrouillent le guidage pour mettre en contact les première et deuxième couronnes selon au moins la zone de contact surfacique, et au-dessus de température seuil, ils déverrouillent le guidage de sorte à modifier l'état compressé du ressort de compression, et par-là éloigner la première couronne de la deuxième couronne,
ou
les moyens d'application de pression de contact comprenant:
- au moins un premier ressort de compression (60), logé dans une cavité borgne de l'une et/ou l'autre des première et deuxième couronnes;
- au moins un second ressort de compression (64) agencé à l'extérieur de la première ou la deuxième couronne, le premier et le deuxième ressort étant dans un état compressé au-dessous de la température seuil, le deuxième ressort étant configuré pour exercer, dans un état compressé, un effort supérieur à l'effort exercé par le premier ressort et ainsi mettre en contact les première et deuxième couronnes selon au moins une la zone de contact surfacique;
- au moins un tirant de liaison (62), autour duquel sont montés les premier et deuxième ressorts, le tirant étant inséré dans les première et deuxième couronnes en étant maintenu mécaniquement à ses deux extrémités au-dessous de la température seuil, avec possibilité de coulissement au-dessus de la température seuil,
- des billes (16) bloquées dans au moins une gorge périphérique du tirant de liaison par un matériau MCP dont la température de fusion est la température seuil et débloquées au-dessus de celle-ci de sorte à décompresser le premier ressort de compression sur une plus grande course que le deuxième ressort, et par-là éloigner la première couronne de la deuxième couronne.

3. Interrupteur thermique (1) selon la revendication 2, chacun des premier et deuxième ressorts de compression étant un ressort hélicoïdal, un ensemble de rondelles Belleville ou un ressort ondulé.

4. Interrupteur thermique (1) selon la revendication 3, comprenant une tige de liaison (62), autour de laquelle sont montés les premier et deuxième ressorts, la tige étant insérée dans les première et deuxième couronnes en étant maintenue à ses deux extrémités avec possibilité de coulissement au-dessus de la température seuil, la tige étant de préférence filetée à au moins l'une de ses extrémités, qui est vissée à un écrou (63) à l'extérieur de la deuxième couronne et, au-dessous de la température seuil, l'autre de ses extrémités formant un épaulement (620) maintient la pièce en matériau thermosensible à l'extérieur de la première couronne.

5. Interrupteur thermique (1) selon l'une des revendications 2 à 4, le matériau thermosensible étant un Matériau à Changement de Phase (MCP) au-dessus de la température seuil, l'interrupteur thermique comprenant de préférence un bac de collecte (610) pour collecter le Matériau à Changement de Phase (MCP) sous sa forme liquide au-dessus de la température seuil, ou le matériau thermosensible de la pièce étant un matériau dont le module d'Young et/ou la limite d'élasticité chute(nt) au-dessus de la température seuil.

6. Interrupteur thermique (1) selon la revendication 2, la cavité étanche étant réalisée au moyen d'un soufflet (68).

7. Interrupteur thermique (1) selon la revendication 2 ou 6, le liquide étant de l'eau, éventuellement additionnée de composés chimiques.

8. Interrupteur thermique (1) selon la revendication 2, les moyens de verrouillage/déverrouillage comprenant au moins un organe de verrouillage/déverrouillage et une sonde de température dite passive, comprenant un boitier (12) renfermant un Matériau à Changement de Phase (MCP) apte à se dilater au-dessus de la température seuil, et un câble (13) relié d'une part au boitier et d'autre part à l'(es) organe(s) de verrouillage de telle sorte qu'au-dessus de la température seuil le câble exerce une traction sur l'(es) organe(s) de verrouillage.

9. Interrupteur thermique (1) selon la revendication 8, dans lequel :
- le ressort de compression (64) est logé entre la deuxième couronne et un support destiné à être solidaire du premier élément;
- l'organe de verrouillage est un crochet de verrouillage (15) auquel est directement fixé le câble, le crochet étant monté pivotant entre la position de verrouillage dans laquelle il est en prise avec une gorge de verrouillage (110) pratiquée dans le dispositif de guidage et la position de déverrouillage dans laquelle il est libéré de la gorge, le ressort de compression étant décompressé dans la position de déverrouillage du crochet.

10. Interrupteur thermique (1) selon la revendication 8, dans lequel les organes de verrouillage comprennent une fourchette (17) à laquelle est directement fixée le câble et des billes de verrouillage (16), la fourchette étant montée pivotante entre la position de verrouillage dans laquelle elle maintient le ressort dans son état compressé de mise en contact, avec les billes logées dans une gorge du dispositif de guidage et la position de déverrouillage dans laquelle elle libère les billes de la gorge, le ressort de compression étant davantage compressé dans la position de déverrouillage du crochet.

11. Interrupteur thermique (1) selon l'une des revendications précédentes, l'une et/ou l'autre des première et deuxième couronnes étant revêtue(s) d'un ou plusieurs matériau(x) d'interface thermique dans la(es) zone(s) de contact surfacique, le(s) matériau(x) d'interface étant de préférence choisi(s) parmi une graisse thermique, une feuille en alliage métallique mou, un matériau fusible, un polymère chargé ou une combinaison de ceux-ci.

12. Interrupteur thermique (1) selon l'une des revendications précédentes, comprenant au moins un ressort de compression (64, 7) configuré pour exercer un effort tendant à rapprocher les première et deuxième couronnes, le ressort de compression étant de préférence un ressort hélicoïdal, un ensemble de rondelles Belleville ou un ressort ondulé, le ressort de compression étant de préférence agencé entre la deuxième couronne et un support solidaire de la première couronne, de préférence en appui contre la deuxième couronne et le support.

13. Système (10) comprenant :
- un élément (2) formant une source froide ;
- un élément (3) formant une source de chaleur ;
- un interrupteur thermique (1) pour établir ou interrompre une liaison thermique entre les source froide et de chaleur (2, 3) selon l'une des revendications précédentes, la source froide étant de préférence une virole (2) à l'intérieur de laquelle la première couronne est fixée, la première couronne de plus grande dimension que la deuxième couronne étant de préférence solidaire de la source froide, tandis que la deuxième couronne est de préférence solidaire de la source de chaleur, la source de chaleur étant de préférence un équipement comprenant un boitier (3) logeant au moins un composant électronique, autour duquel est fixée la deuxième couronne, le système comprenant de préférence encore des moyens de guidage (11) fixés au boitier pour guider en translation ce dernier à l'intérieur de la virole lors de l'éloignement ou rapprochement entre première couronne et deuxième couronne, le système comprenant de préférence encore au moins un dispositif de stockage thermique (9) agencé sur au moins l'une des parois du boitier pour absorber la puissance thermique dissipée par le(s) composant(s) électronique(s) lorsque la liaison thermique est interrompue.

14. Système (10) selon la revendication 13, constituant un système embarqué.

15. Utilisation du système embarqué (10) selon la revendication 14 dans le domaine spatial et/ou de l'aéronautique et/ou du transport.
